Europäisches Patentamt

European Patent Office

Office européen des brevets

(11) Veröffentlichungsnummer: **0 505 595 A1**

## (12) EUROPÄISCHE PATENTANMELDUNG

(21) Anmeldenummer: **91104956.7**

(22) Anmeldetag: **28.03.91**

(51) Int. Cl.5: **H02K 1/02**, H02K 37/16, G04C 13/11

(43) Veröffentlichungstag der Anmeldung:
**30.09.92 Patentblatt 92/40**

(84) Benannte Vertragsstaaten:
**AT CH DE FR GB IT LI**

(71) Anmelder: **VACUUMSCHMELZE GMBH**
**Grüner Weg 37 Postfach 2253**
**W-6450 Hanau 1(DE)**

(72) Erfinder: **Behnke, Wernfried**
**Akazienweg 12**
**W-6458 Rodenbach(DE)**
Erfinder: **Radeloff, Christian, Dr.**
**Fritz-Schubert-Ring 36**
**W-6454 Bruchköbel 1(DE)**

(54) **Schrittmotor für Uhren.**

(57) Für Quarzuhren mit Analoganzeige werden Schrittmotoren eingesetzt, bei denen der Stator einstückig aus einer ersten Nickel-Eisenbasislegierung mit niedriger Sättigungsinduktion besteht, während als Material für den mit dem Stator verbundenen Spulenkern eine Nickel-Eisenbasislegierung mit hoher Sättigungsinduktion verwendet wird. Erfindungsgemäß wird vorgeschlagen, für den Spulenkern eine Nickel-Eisenbasislegierung mit einem Nickelgehalt von 35 bis 55 Gew.-% sowie einem spezifischen Widerstand von 60 bis 100 $\mu\Omega$cm zu verwenden. Hierdurch kann die pro Schaltschritt benötigte elektrische Energie verringert und damit die Batterie-Lebensdauer erhöht werden. Um den spezifischen Widerstand im angegebenen Bereich zu erreichen, weisen die Legierungen insbesondere Zusätze von Mo, Nb, Cr, V, Mn, Ti, Si und/oder Al auf. Da die vorgeschlagenen Nickel-Eisenbasislegierungen eine niedrigere Sättigungsinduktion aufweisen, als die bisher verwendeten binären Nickel-Eisenlegierungen, ist es weiterhin möglich den Stator und den Spulenkern aus der gleichen Magnetlegierung zu fertigen. Das Strom-Zeitintegral als Maß für die Energie-Entnahme aus der Batterie ist beispielsweise für eine erfindungsgemäße Legierung 40Ni-0,5Cr-Fe (Kurve 7) bei einem Induktionshub von 1 T um etwa 20 % niedriger als bei Verwendung einer binären Eisen-Nickellegierung mit 48 Gew.-% Nickel nach dem Stand der Technik (Kurve 8).

Fig.: 5

Die Erfindung betrifft einen Schrittmotor, insbesondere für Quarzuhren mit Analoganzeige, mit einem insbesondere einstückigen Stator, der einen Rotor umgibt, und einem mit dem Stator verbundenen Spulenkern aus einer Nickel-Eisenbasislegierung mit zugehöriger Spulenkernwicklung zur Erzeugung eines pulsförmigen Magnetfeldes.

Ein solcher Schrittmotor ist aus der DE-OS 28 47 921 bekannt. Der bekannte Schrittmotor weist einen einstückigen Stator und einen mit dem Stator verbundenen Spulenkern auf. Bei dieser einstückigen Ausführungsform des Stators ist es erforderlich, daß einzelne Bereiche des Stators, die als Verengungen ausgeführt sind, im Betrieb magnetisch gesättigt werden. Daher wird dort für den Stator ein Material mit einer niedrigen Sättigungsinduktion vorgeschlagen. Das Spulenkernmaterial dagegen soll eine hohe Sättigungsinduktion aufweisen, um einen ausreichenden Magnetfluß zur Sättigung der Engstellen des Stators zur Verfügung zu stellen. Die Eigenschaften der nach dem Stand der Technik zu verwendenden Magnetmaterialien sind beispielsweise aus dem Buch von Bozorth: Ferromagnetism, D. van Nostrand Company, Princeton 1951, bekannt.

Da solche Schrittmotoren vorwiegend in analog anzeigenden Quarzuhren eingesetzt werden, bei denen die zur Erzeugung des Magnetflusses erforderliche Energie einer Batterie entnommen wird, gibt es nicht zuletzt auch aus Gründen des Umweltschutzes Überlegungen, die eingesetzten Schrittmotoren dahingehend zu optimieren, daß eine höhere Batterie-Lebensdauer erreicht wird.

Aufgabe der Erfindung ist es daher, einen Schrittmotor anzugeben, mit dem die Batterie-Lebensdauer gegenüber bekannten Schrittmotoren erhöht werden kann. Weiterhin ist es Aufgabe der Erfindung, einen kostengünstigeren und einfacheren Schrittmotor anzugeben, bei dem das Erfordernis unterschiedlicher Magnetmaterialien für Stator und Spulenkern entfällt.

Zur Lösung der erstgenannten Aufgabe ist vorgesehen, daß die Nickel-Eisenbasislegierung des Spulenkerns einen Nickelgehalt von 35 bis 55 Gew.-% sowie einen spezifischen Widerstand von 60 bis 100 $\mu\Omega$cm aufweist. Zur Lösung der weiteren Aufgabe wird vorgeschlagen, Stator und Spulenkern aus der gleichen Nickel-Eisenbasislegierung herzustellen. Sowohl nach dem Ausführungsbeispiel des Standes der Technik als auch in der Praxis werden bei den gattungsgemäßen Schrittmotoren für den Spulenkern solche Nickel-Eisenbasislegierungen eingesetzt, die hinsichtlich der Sättigungsinduktion (bzw. Sättigungsmagnetisierung) im Maximum des Eisen-Nickel-Legierungssystems angesiedelt sind. Es handelt sich dabei um binäre Eisen-Nickel-Legierungen mit einem Nickelgehalt von 45 bis etwa 50 Gew.-%.

Bei der in der DE-OS 28 47 921 als vorteilhaft angegebenen Legierung PERMALLOY 45 handelt es sich beispielsweise um eine binäre Nickel-Eisen-Legierung mit einem Nickelgehalt von 45 Gew.-%. Zur Erzeugung des erforderlichen Magnetflusses bei möglichst geringen Abmessungen wurden daher die Nickel-Eisen-Legierungen mit der höchsten Sättigungsinduktion als Magnetkernmaterial ausgewählt. Diese Materialien weisen jedoch einen vergleichsweise niedrigen spezifischen Widerstand und damit vergleichsweise hohe Ummagnetisierungsverluste auf. Bei einer binären Nickel-Eisen-Legierung mit 47,5 Gew.-% Nickel beträgt der spezifische Widerstand beispielsweise etwa 45 $\mu\Omega$cm. Die erfindungsgemäß vorgeschlagenen Nickel-Eisenbasislegierungen sollen dagegen einen spezifischen Widerstand von etwa 60 bis 100 $\mu\Omega$cm aufweisen. Eine solche Erhöhung des spezifischen Widerstandes kann dadurch erreicht werden, daß den binären Nickel-Eisen-Legierungen widerstandserhöhende Elemente zulegiert werden. Die erfindungsgemäß verwendeten Nickel-Eisenbasislegierungen mit einem spezifischen Widerstand von 60 bis 100 $\mu\Omega$cm weisen - verglichen mit den bisher verwendeten binären Nickel-Eisen-Legierungen mit hoher Sättigungsinduktion - eine deutlich verringerte Sättigungsinduktion auf, so daß sie bisher für die Verwendung als Magnetkernmaterial bei einem gattungsgemäßen Schrittmotor nicht in Erwägung gezogen worden sind.

Überraschenderweise hat sich jedoch gezeigt, daß bei Schrittmotoren mit den erfindungsgemäßen Magnetkernmaterialien trotz der niedrigeren Sättigungsinduktion bei gleichen Abmessungen ein ausreichender magnetischer Fluß erzielt werden kann und zwar bei gleichzeitiger Verringerung der im Betrieb erforderlichen elektrischen Leistung und damit einer höheren Batterie-Lebensdauer. Durch den höheren spezifischen Widerstand der erfindungsgemäß verwendeten Legierungen sinken die Ummagnetisierungsverluste, so daß die pro Schaltschritt verbrauchte elektrische Energie verkleinert wird. Der erhöhte spezifische Widerstand des Magnetkernmaterials wird ebenfalls als ursächlich für die Tatsache angesehen, daß trotz verringerter Sättigungsinduktion ein ausreichender Magnetfluß erzeugt wird. Die niedrigere Sättigungsinduktion wird offensichtlich durch die größere Eindringtiefe des Flusses aufgrund des höheren spezifischen elektrischen Widerstandes kompensiert.

Zur Erhöhung des spezifischen Widerstandes kann binären Nickel-Eisen-Legierungen beispielsweise bis zu 8 Gew.-% mindestens eines der Elemente Mangan, Molybdän, Niob, Chrom und Vanadium und/oder bis zu 5 Gew.-% mindestens eines der Elemente Titan, Silizium und Aluminium zulegiert werden. Um eine spürbare Anhebung des spezifischen Widerstandes zu erreichen, sollten diese Zusatzelemente vorzugsweise mindestens mit 0,1 Gew.-% in der Legierung enthalten sein.

Da es mit den erfindungsgemäß verwendeten Legierungen möglich ist, bei einem gattungsgemäßen Schrittmotor nunmehr für den Spulenkern Materialien mit niedrigerer Sättigungsinduktion einzusetzen, ergibt sich insbesondere auch die Möglichkeit, diese Materialien auch für den Stator zu verwenden, so daß vorteilhafterweise der Stator und der Spulenkern aus der gleichen Nickel-Eisenbasislegierung hergestellt werden können.

Im folgenden wird die Erfindung anhand der Ausführungsbeispiele und der Zeichnungen näher beschrieben. Es zeigen:

Fig. 1      den schematischen Aufbau eines Schrittmotors;

Fig. 2      den zeitlichen Verlauf von Spannung und Strom in der Spulenkernwicklung;

Fig. 3      die Abhängigkeit der Sättigungsinduktion vom Nickelgehalt bei binären Eisen-Nickel-Legierungen (nach Bozorth: Ferromagnetism);

Fig. 4      die Abhängigkeit des spezifischen Widerstandes vom Nickelgehalt bei binären Eisen-Nickel-Legierungen (nach Bozorth: Ferromagnetism);

Fig. 5      die Abhängigkeit zwischen Induktionshub und Stromzeitfläche;

Fig. 6      die Abhängigkeit des spezifischen Widerstandes vom Vanadium-Gehalt bei Fe-45Ni-V-Legierungen (nach Bozorth: Ferromagnetism);

Fig. 7      die Abhängigkeit des spezifischen Widerstandes vom Molybdängehalt bei Fe-45Ni-Mo-Legierungen (nach Bozorth: Ferromagnetism).

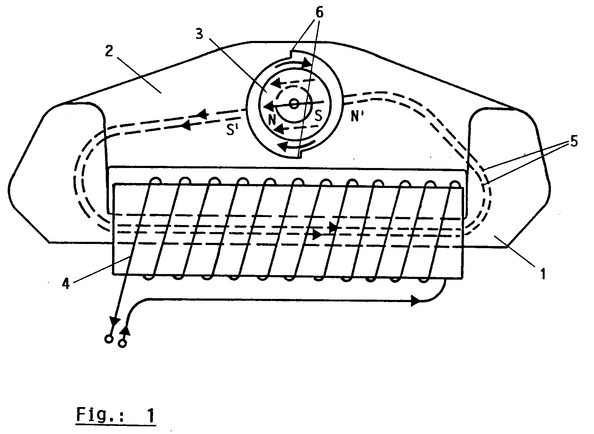

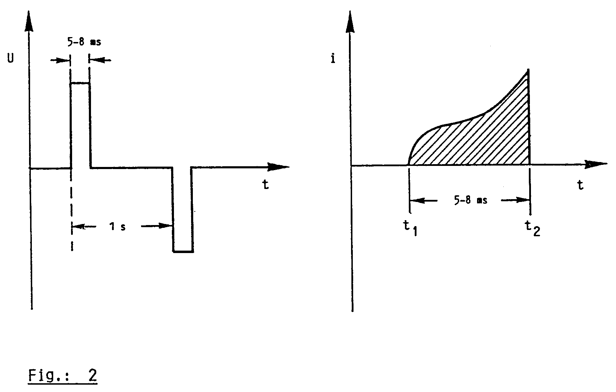

In Fig. 1 ist ein gattungsgemäßer Schrittmotor dargestellt. Der Schrittmotor beinhaltet einen Spulenkern 1, der mit einem Statorblech 2 verbunden ist, wobei das Statorblech 2 einen Rotor 3 umgibt. Der Spulenkern 1 ist mit einer elektrischen Wicklung 4 versehen. Durch eine nicht eingezeichnete quarzgesteuerte Elektronik wird die Batteriespannung in Form von Rechteckspannungsimpulsen in einem Abstand von 1 s bipolar auf die Wicklung 4 des Spulenkerns 1 gegeben. Die Pulsdauer beträgt typischerweise 5 bis 8 ms. Der zeitliche Verlauf der Spannungsimpulse und der Stromverlauf in der Spulenkernwicklung sind schematisch in Fig. 2 dargestellt. Durch den periodischen Stromfluß in der Wicklung 4 entsteht im Spulenkern ein magnetischer Fluß, der in Fig. 1 in Form von Flußlinien 5 dargestellt ist. Der magnetische Fluß des Spulenkerns 1 wird an den Stator 3 weitergeführt und bewirkt an den Engstellen 6 des Stators, die in Höhe des Rotors angebracht sind, eine Sättigung, d. h. die Engstellen 6 wirken dann magnetisch wie ein Luftspalt. Durch die mit jedem Puls wechselnde Flußrichtung in Verbindung mit den vorgesehenen Verengungen 6 wird der Rotor bei jedem Puls um 180° gedreht.

Als Maß für die bei jedem Puls der Batterie entnommene Energie kann die in Fig. 2 schraffiert dargestellte Stromzeitfläche, die sich aus dem zeitlichen Verlauf des Stromes in der Wicklung 4 ergibt, herangezogen werden. Die Stromzeitfläche ist im wesentlichen eine Funktion der Koerzitivfeldstärke, der Blechdicke des Spulenkerns und der Ummagnetisierungsverluste, wobei die Ummagnetisierungsverluste ihrerseits wieder eine Funktion des spezifischen Widerstandes sind. Somit kann durch Erhöhung des spezifischen Widerstandes die Stromzeitfläche verkleinert werden. Überraschenderweise hat sich gezeigt, daß dies mit den erfindungsgemäß verwendeten Legierungen möglich ist, ohne daß der im Spulenkern erzeugte magnetische Fluß verringert wird.

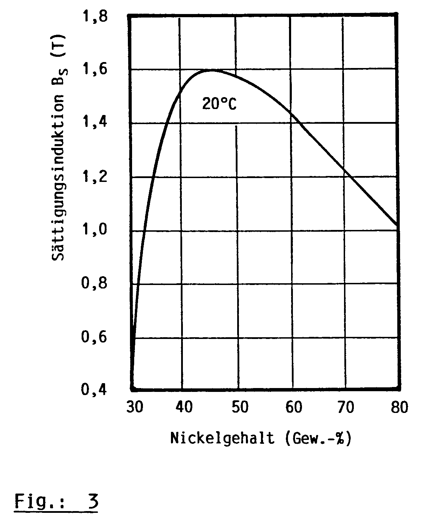

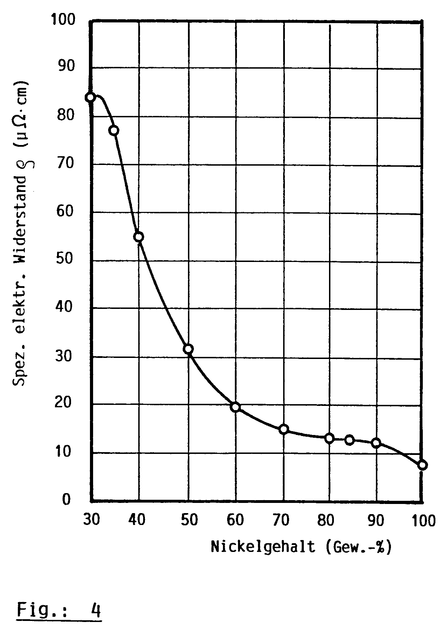

Als Magnetkernmaterial werden nach dem Stand der Technik binäre Eisen-Nickel-Legierungen mit möglichst hoher Sättigungsinduktion eingesetzt. In Fig. 3 ist die Abhängigkeit der Sättigungsinduktion vom Nickelgehalt für solche binären Eisen-Nickel-Legierungen dargestellt. Das Maximum der Sättigungsinduktion liegt bei diesen Legierungen etwa bei einem Nickelgehalt zwischen 45 und 50 Gew.-%. Diese Legierungen mit hoher Sättigungsinduktion wurden nach dem Stand der Technik als erforderlich angesehen, um bei möglichst kleinen Abmessungen den größtmöglichen Fluß in dem Spulenkern 1 zu erzeugen. Wie aus Fig. 4 ersichtlich ist, in der der spezifische Widerstand in Abhängigkeit vom Nickelgehalt für binäre Eisen-Nickel-Legierungen dargestellt ist, weisen diese Legierungen mit hoher Sättigungsinduktion einen spezifischen Widerstand von etwa 40 $\mu\Omega$cm auf.

Zur Verdeutlichung der Erfindung sind in der Tabelle die wesentlichen magnetischen und elektrischen Eigenschaften von Schrittmotoren mit einstückigem Stator 2 aufgelistet, bei denen erfindungsgemäße Werkstoffe zum Einsatz kommen. Bei den Eigenschaften handelt es sich um die Sättigungsmagnetisierung Ms und den spezifischen Widerstand $\varsigma$ des Materials sowie die Eindringtiefe $\delta$, die für eine Permeabilität $\mu 4$ = 10 000 und eine Frequenz f = 0,2 kHz angegeben ist.

Weiterhin sind der magnetische Fluß im Spulenkern ($\phi 1$) sowie in den Stator-Engstellen ($\phi 2$) und im Rotor ($\phi 3$) angegeben. Der magnetische Fluß $\phi 1$ wurde bestimmt aus $\phi 1 = 2\delta \cdot b1 \cdot 10^{-6} \cdot Ms$, wobei die Breite des Kerns b1 = 0,7 mm beträgt. In entsprechender Weise wurde der Fluß $\phi 2$ in den Stator-Engstellen bestimmt, wobei anstelle der Breite des Kerns die Breite der Engstellen mit b2 = 2 $\cdot$ 0,1 mm eingesetzt wurde. Um den Rotor 3 bewegen zu können, muß ein Streufeld $\phi s$ aufgebaut werden, das sich aus der Differenz der Flußkomponenten $\phi 1$, $\phi 2$ und $\phi 3$ zu $\phi s = \phi 1 - \phi 2 - \phi 3$ ergibt. Dieser Wert $\phi s$ des

Streufeldes muß - um eine Bewegung des Rotors zu erreichen - größer als 0 sein. Dieser Wert ist daher eine wesentliche Größe für den Schrittmotor und ebenfalls in der Tabelle angegeben. Ferner ist in der Tabelle das Strom-Zeitintegral $\int i dt$, das ein Maß für die verbrauchte elektrische Energie darstellt, aufgelistet.

Als beispielhafte erfindungsgemäße Legierungen werden in der Tabelle die Legierungen 40Ni-0,5Cr-Fe und 42Ni-2Cr-Fe aufgeführt sowie die sich daraus ergebenden Eigenschaften des erfindungsgemäßen Schrittmotors, wenn sowohl Stator 2 als auch Spulenkern 1 aus der gleichen Legierung bestehen. Zum Vergleich sind ferner die Eigenschaften eines Schrittmotors nach dem Stand der Technik angegeben, bei dem der Spulenkern 1 aus einer binären Nickel-Eisen-Legierung mit 47,5 Gew.-% Nickel und der Stator 2 aus einer 77Ni-Cu-Mo-Fe-Legierung mit 77 Gew.-% Nickel, 4,5 Gew.-% Kupfer, 3,8 % Molybdän, Rest Eisen besteht. Zum Vergleich sind ferner die Werte angegeben, die sich ergeben, wenn sowohl Stator 2 als auch Spulenkern 1 aus einer binären Nickel-Eisen-Legierung mit 47,5 Gew.-% Nickel bzw. aus der bereits erwähnten 77Ni-Cu-Mo-Fe-Legierungen bestehen. In den beiden letzteren Fällen ergibt sich für den Streufluß $\phi_s$ ein negativer Wert, so daß es mit diesen Materialien nicht möglich ist, einen gattungsgemäßen Schrittmotor aufzubauen, bei dem der Spulenkern und der einstückige Stator aus dem gleichen Material bestehen, ohne die Abmessungen zu vergrößern. Dies ist auch der Grund, weshalb nach dem Stand der Technik für den Spulenkern und den Stator bei einem gattungsgemäßen Schrittmotor verschiedene Materialien eingesetzt werden. Im folgenden reicht es daher aus, die Eigenschaften der erfindungsgemäßen Schrittmotoren mit den Eigenschaften eines Schrittmotors nach dem Stand der Technik zu vergleichen, bei dem der Stator und der Magnetkern aus verschiedenen Materialien bestehen.

Ein Vergleich der Sättigungsmagnetisierungen Ms zeigt, daß die Sättigungsmagnetisierung der erfindungsgemäßen Werkstoffe aufgrund des niedrigeren Nickelgehaltes und der Legierungszusätze niedriger ist als beim Spulenkernmaterial des Schrittmotors nach dem Stand der Technik. Im Gegensatz dazu ist der spezifische Widerstand mit den erfindungsgemäßen Werkstoffen deutlich höher als bei dem Spulenkernmaterial nach dem Stand der Technik. Dies hat zur Folge, daß auch die Eindringtiefe $\delta$ bei den erfindungsgemäßen Werkstoffen deutlich erhöht ist.

Die Auswirkungen dieser Unterschiede in der Sättigungsmagnetisierung und im spezifischen Widerstand werden bei der Betrachtung des magnetischen Flusses sichtbar. So weist der magnetische Fluß $\phi_1$ des Spulenkerns 1 bei den Schrittmotoren mit den erfindungsgemäßen Werkstoffen höhere Werte auf als bei dem Schrittmotor nach dem Stand der Technik, obwohl die Sättigungsmagnetisierung deutlich geringer ist. Die Ursache hierfür ist offenbar in der durch den erhöhten spezifischen Widerstand vergrößerten Eindringtiefe zu sehen. Daraus ergibt sich, daß sich die erfindungsgemäßen Werkstoffe in vorteilhafter Weise für die Verwendung als Spulenkernmaterial eignen. Wie der weitere Vergleich der Werte des magnetischen Flusses zeigt, können die erfindungsgemäßen Materialien jedoch auch gleichzeitig als Statormaterial eingesetzt werden. Obwohl der magnetische Fluß $\phi_2$ in den Stator-Engstellen 6 bei Verwendung der erfindungsgemäßen Werkstoffe als Statormaterial größer ist als bei Verwendung des bekannten Statormaterials nach dem Stand der Technik, ergibt sich insgesamt aufgrund des hohen Wertes für den Fluß im Spulenkern $\phi_1$ für den Streufluß $\phi_s$ ein positiver Wert auch bei Verwendung der erfindungsgemäßen Werkstoffe sowohl für Spulenkern 1 als auch für den Stator 2. Der Streufluß ist in diesem Fall vergleichbar mit dem Streufluß bei der technisch verwendeten Kombination.

Ein Vergleich des Strom-Zeitintegrals (angegeben in Prozent des Wertes für den Schrittmotor mit der Legierungskombination nach dem Stand der Technik und für einen Induktionshub $\Delta B = 1$ T) zeigt jedoch, daß dieses bei dem Schrittmotor mit den erfindungsgemäß verwendeten Werkstoffen deutlich niedriger ist als bei einem Schrittmotor mit einer Legierungskombination nach dem Stand der Technik. Dies bedeutet, daß die pro Schaltschritt verbrauchte elektrische Energie bei einem Schrittmotor mit den erfindungsgemäß verwendeten Werkstoffen deutlich niedriger ist als bei dem Schrittmotor nach dem Stand der Technik.

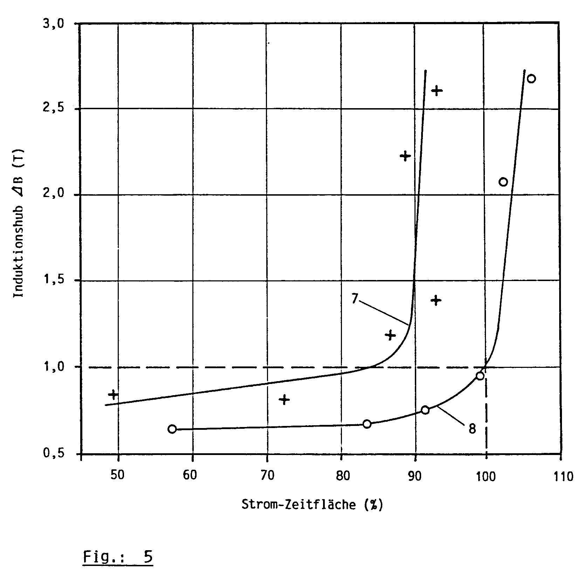

In Fig. 5 ist der Zusammenhang zwischen dem Strom-Zeitintegral und dem Induktionshub $\Delta B$ dargestellt, und zwar in Kurve 7 bei Verwendung einer erfindungsgemäßen Legierung der Zusammensetzung 40Ni-0,5Cr-Fe und in Kurve 8 für eine binäre Nickel-Eisenlegierung mit 48 Gew.-% Nickel nach dem Stand der Technik als Werkstoff für den Spulenkern 1. Die Messungen wurden mit Rechteckspannungsimpulsen einer Pulsdauer von 6 ms bei einer Pulsfolge von 1 s an Ringproben mit einer Banddicke von 0,5 mm durchgeführt. Unabhängig von der Größe des Induktionshubes ist das Strom-Zeitintegral bei der erfindungsgemäßen Legierung stets deutlich niedriger als mit der Legierung nach dem Stand der Technik.

Während der erfindungsgemäße Schrittmotor in den genannten Ausführungsbeispielen so gestaltet war, daß für den Spulenkern 1 und den Stator 2 das gleiche Magnetmaterial verwendet wurde, ist es auch möglich, für den Stator 2 ein anderes Material, wie beispielsweise die schon genannte hochnickelhaltige Legierung 77Ni-4,5Cu-3,8Mo-Fe zu verwenden. Dies hat eine weitere Reduzierung des Flusses $\phi_2$ in den Stator-Engstellen 6 und aufgrund des erhöhten Flusses $\phi_1$ im Spulenkern 1 mit den erfindungsgemäßen Magnetwerkstoffen eine Erhöhung des Streuflusses $\phi$s zur Folge. Bei einer solchen Ausgestaltung können dann insbesondere die Abmessungen des Spulenkerns 1 weiter verringert werden.

Die Erhöhung des spezifischen Widerstandes auf den erfindungsgemäßen Wert von etwa 60 bis 100 $\mu\Omega$cm kann insbesondere durch Zusatz der oben bereits genannten Legierungselemente erfolgen. Der jeweils erforderliche Zusatz an widerstandserhöhenden Elementen ist dabei grundsätzlich abhängig von dem Nickelgehalt der Legierung. So ist beispielsweise aus Fig. 4 zu ersehen, daß mit abnehmendem Nickelgehalt der spezifische Widerstand zunimmt, so daß bei niedrigerem Nickelgehalt bereits eine geringere Menge an zusätzlich zugesetzten Legierungselementen zur Erhöhung des spezifischen Widerstandes ausreicht als bei Legierungen mit einem höheren Nickelgehalt. Insbesondere kann bei Legierungen mit ausreichend niedrigem Nickelgehalt bereits mit binären Eisen-Nickel-Legierungen der erforderliche Wert für den spezifischen Widerstand erreicht werden. Vorzugsweise beträgt der Nickelgehalt jedoch 40 bis 48 Gew.-%.

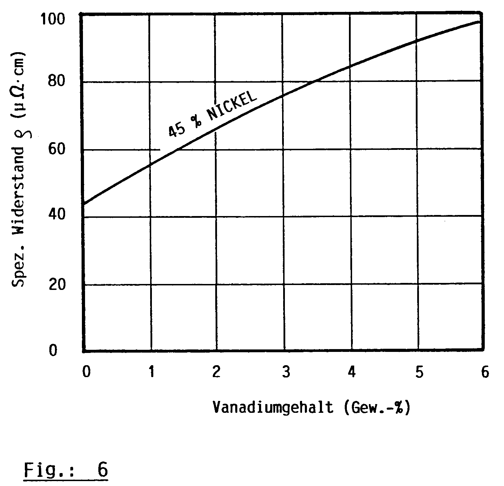

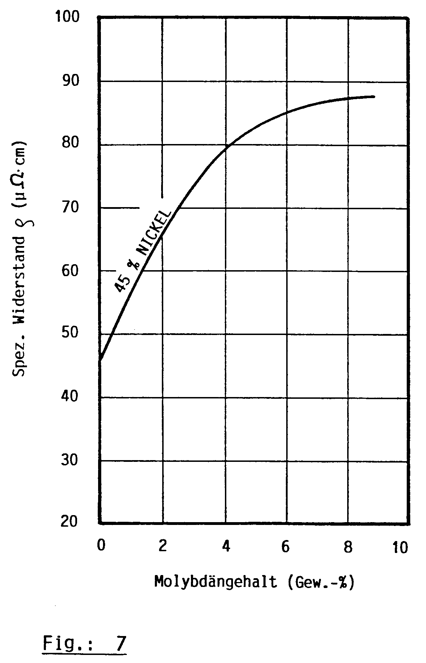

Aus den Fig. 6 und 7 ist ersichtlich, inwieweit durch die Zusatzelemente der spezifische Widerstand ansteigen kann. In Fig. 6 ist die Abhängigkeit des spezifischen Widerstands vom Vanadiumgehalt für eine Fe-45Ni-V-Legierung mit 45 Gew.-% Nickel dargestellt. Fig. 7 zeigt die Abhängigkeit des spezifischen Widerstandes vom Molybdängehalt für eine Fe-45Ni-Mo-Legierung mit ebenfalls 45 Gew.-% Nickel. Für eine Eisen-Nickelbasislegierung mit 45 Gew.-% Nickel ist somit der Zusatz von mehr als 1 Gew.-% Vanadium oder Molybdän notwendig, um den spezifischen Widerstand auf mehr als 60 $\mu\Omega$cm zu erhöhen. Bei Eisen-Nickelbasislegierungen mit geringerem Nickelgehalt reichen hierzu bereits geringere Zusätze aus, bei Eisen-Nickelbasislegierungen mit höherem Nickelgehalt sind dagegen die Zusätze größer zu wählen als in diesen Beispielen. Ähnliche Zusammenhänge wie die dargestellten ergeben sich auch bei Zusatz der anderen bereits genannten Elemente.

Während in den genannten Ausführungsbeispielen die Zusatzelemente einzeln zugesetzt worden sind, können auch Kombinationen von Zusatzelementen der Eisen-Nickelbasislegierung zulegiert werden. Auch in diesen Fällen ergibt sich dann ein Absinken der Sättigungsinduktion, das jedoch durch die Anhebung des spezifischen Widerstandes und damit der Eindringtiefe soweit kompensiert wird, daß in den Magnetmaterialien ein ausreichender Fluß erzeugt werden kann.

## T a b e l l e

| | Erfindungsgemäße Werkstoffe | | techn. verwend. Kombination | Vergleichslegierungen | |
|---|---|---|---|---|---|
| | 40Ni-0,5Cr-Fe | 42Ni-2Cr-Fe | a) 47,5Ni-Fe<br>b) 77Ni-Cu-Mo-Fe | 47,5Ni-Fe | 77Ni-Cu-Mo-Fe |
| $M_S$ (Vs/m$^2$) | 1,45 | 1,35 | a) 1,50  b) 0,74 | 1,50 | 0,74 |
| $\rho$ ($\mu\Omega$ cm) | 63 | 75 | a) 45  b) 60 | 45 | 60 |
| $\delta$ (mm) | 0,280 | 0,306 | 0,237 | 0,237 | 0,273 |
| $\phi 1$ ($\mu$Vs) | 0,57 | 0,58 | 0,49 | 0,49 | 0,25 |
| $\phi 2$ ($\mu$Vs) | 0,16 | 0,16 | 0,07 | 0,14 | 0,07 |
| $\phi 3$ ($\mu$Vs) | 0,40 | 0,40 | 0,40 | 0,40 | 0,40 |
| $\phi s$ ($\mu$Vs) | + 0,01 | + 0,02 | + 0,02 | – 0,05 | – 0,22 |
| $\int idt$ (%) | 86 | 82 | 100 | – | – |

## Patentansprüche

1. Schrittmotor, insbesondere für Quarzuhren mit Analoganzeige, mit einem insbesondere einstückigen Stator (2), der einen Rotor (3) umgibt, und einem mit dem Stator (2) verbundenen Spulenkern (1) aus einer Nickel-Eisenbasislegierung mit zugehöriger Spulenkernwicklung (4) zur Erzeugung eines pulsförmigen Magnetfeldes, **dadurch gekennzeichnet**, daß die Nickel-Eisenbasislegierung des Magnetkerns (1) einen Nickelgehalt von 35 - 55 Gew.-% sowie einen spezifischen Widerstand von 60 bis 100 $\mu\Omega$cm aufweist.

2. Schrittmotor nach Anspruch 1, **dadurch gekennzeichnet**, daß der Stator (2) aus einer Nickel-Eisenbasislegierung besteht.

3. Schrittmotor nach Anspruch 2, **dadurch gekennzeichnet**, daß das Statormaterial aus einer Nickel-Eisenbasislegierung mit einem Nickelgehalt von 36 - 55 Gew.-% besteht und einen spezifischen Widerstand von 60 bis 100 $\mu\Omega$cm aufweist.

4. Schrittmotor nach Anspruch 3, **dadurch gekennzeichnet**, daß Stator (2) und Spulenkern (1) aus der gleichen Nickel-Eisenbasislegierung bestehen.

5. Schrittmotor nach einem der vorhergehenden Ansprüche, **dadurch gekennzeichnet**, daß die Nickel-Eisenbasislegierung 40 bis 48 Gew.-% Nickel enthält.

6. Schrittmotor nach einem der vorhergehenden Ansprüche, **dadurch gekennzeichnet**, daß die Nickel-Eisenbasislegierung bis zu 8 Gew.-% mindestens eines der Elemente Mo, Nb, Cr, Mn und V enthält.

7. Schrittmotor nach einem der vorhergehenden Ansprüche, **dadurch gekennzeichnet**, daß die Nickel-Eisenbasislegierung bis zu 5 Gew.-% mindestens eines der Elemente Si, Al und Ti enthält.

8. Schrittmotor nach Anspruch 6 oder 7, **dadurch gekennzeichnet**, daß die Nickel-Eisenbasislegierung mindestens 0,1 Gew.-% mindestens eines der Elemente Mo, Nb, Cr, V, Si, Al, Mn und Ti enthält.

Fig.: 1

Fig.: 2

Fig.: 3

Fig.:  4

Fig.: 5

Fig.: 6

Fig.: 7

Europäisches
Patentamt

**EUROPÄISCHER RECHERCHENBERICHT**

Nummer der Anmeldung

EP    91 10 4956

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1 917 313 (GENERAL TIME CORP.) <br> * Seite 10, Absatz 4 - Seite 11, Absatz 1 * <br> * Seite 12, Absatz 4; Abbildung 1 * <br> --- | 1-8 | H02K1/02 <br> H02K37/16 <br> G04C13/11 |
| Y,D | GB-A-2 020 913 (DAINI SEIKOSHA) <br> * Seite 1, Zeile 39 - Seite 3, Zeile 43; Abbildungen * <br> --- | 1-8 | |
| A | JAPANESE PATENTS GAZETTE <br> Section Ch, Week 8604, 5. März 1986 <br> Derwent Publications Ltd., London, GB; <br> Class L, Page 53, AN 86-025765/04 <br> & JP-A-60 248 865 (NIPPON GAKKI SEIZO) 9. <br> Dezember 1985 <br> * Zusammenfassung * <br><br> ----- | 1,5-8 | |

| | RECHERCHIERTE SACHGEBIETE (Int. Cl.5) |
|---|---|
| | H02K <br> G04C |

Der vorliegende Recherchenbericht wurde für alle Patentansprüche erstellt

| Recherchenort | Abschlußdatum der Recherche | Prüfer |
|---|---|---|
| DEN HAAG | 20 NOVEMBER 1991 | ZANICHELLI F. |